Europäisches Patentamt

European Patent Office

Office européen des brevets

(11) Publication number: **0 148 452**
**B1**

## EUROPEAN PATENT SPECIFICATION

(45) Date of publication of patent specification: **11.10.89**

(51) Int. Cl.⁴: **G 21 C 3/32,** G 21 C 3/34

(21) Application number: **84115485.9**

(22) Date of filing: **14.12.84**

(54) A coolant flow mixing grid for a nuclear reactor fuel assembly.

(30) Priority: **30.12.83 US 567450**
**30.12.83 US 567448**

(43) Date of publication of application:
**17.07.85 Bulletin 85/29**

(45) Publication of the grant of the patent:
**11.10.89 Bulletin 89/41**

(84) Designated Contracting States:
**BE CH DE FR GB LI SE**

(56) References cited:
**DE-A-2 157 742**
**FR-A-2 200 587**
**FR-A-2 352 373**
**FR-A-2 375 693**
**US-A-4 061 536**

(73) Proprietor: **WESTINGHOUSE ELECTRIC CORPORATION**
**Westinghouse Building Gateway Center**
**Pittsburgh Pennsylvania 15235 (US)**

(72) Inventor: **Demario, Edmund Emory**
**2816 Orlando Drive**
**Pittsburgh Pennsylvania 15235 (US)**
Inventor: **Boyle, Raymond Francis**
**1942 Lexington**
**San Mateo California 94402 (US)**
Inventor: **Kuchirka, Peter Jacob**
**2511 Orlando Drive**
**Pittsburgh Pennsylvania 15235 (US)**
Inventor: **Sperhac, David James**
**202 Gotham Lane**
**Monroeville Pennsylvania 15146 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to fuel assemblies for nuclear reactors and, more particularly, to a grid structure for providing cross-mixing of coolant flow therethrough.

The power output of a nuclear reactor is limited by the rate at which heat can be removed from the reactor core, and the rate of heat transfer determines the temperatures developed in a reactor core. The power output is also limited by the amount of structural material present in the reactor core, since the structural material parasitically absorbs neutrons which otherwise could be used in the fission process.

In one structural form commonly used for providing a nuclear fuel inventory in nuclear reactors, a plurality of elongate fuel elements or rods are arranged, within a prescribed volume, in a parallel array upright between upper and lower reactor core plates. In order to provide integrity in support, the fuel rods are divided into groups, and the rods in each group are combined as a fuel assembly. Generally, in most reactors, a fluid coolant, such as water, is directed upwards through openings in the lower core support plate and along the fuel rods of the various fuel assemblies so as to receive the thermal energy therefrom.

Generally, heat is not generated uniformly in a reactor. The heat flux decreases axially and radially from a peak at the center of the reactor, or near the center if the reactor is not symmetrical in configuration, and this variation occurs even among the fuel rods within a single fuel assembly. The power variation results in variations in the enthalpy rise of the coolant among the different coolant flow channels throughout the reactor core. In addition, local perturbations in heat generation can occur because of inhomogeneities in the reactor structure. These variations impose special considerations in the design of reactor cooling systems, including a need for establishing variations in the coolant flow rate through the reactor in order to achieve uniform temperature rise in the coolant and thereby avoid local hot-spot conditions and local thermal stresses and distortions in the structural members of the reactor. Along with these considerations, designers are always working toward minimizing the amount of structural materials present in a fuel assembly so as to reduce the pressure drop and thereby increase the output of a reactor. Furthermore, due to the closeness of positioning of the fuel assemblies with respect to each other in a reactor core, designers must take into consideration the structural integrity of each fuel assembly which should be such that the assembly can be installed and removed without interfering with any adjacent assembly.

In order to achieve a more uniform temperature rise in the coolant, avoid local hot-spot conditions, and average the enthalpy rise to maximize power output, it is highly desirable to mix the coolant flow in a given fuel assembly as well as in adjacent fuel assemblies. This was recognized by Tong, et al. in U.S. Patent No. 3,395,077 which sets forth a grid structure, for a can-type fuel assembly, having openings therein through which the fuel elements extend and which is provided with planar mixing vanes for deflecting the coolant from one flow channel laterally across at least a portion of an adjacent coolant channel. A major drawback of this known arrangement is that the fuel rods have a tendency to come into damaging contact with the mixing vanes upon vibration of the rods and upon bending and bowing of the latter due to induced thermal stresses. Moreover, a considerable amount of structural material is present in this kind of grid structure since all of its grid straps are of the same height and the grid is axially supported by the walls of the vertically extending can structure.

Based upon the teachings of the Tong, et al. Patent, Andrews et al. in U.S. Patent No. 3,379,619, Creagan et al. in U.S. Patent No. 4,061,536, and Ferrari et al. in U.S. Patent No. 3,920,515 (corresponding to FR-A-2 200 587), incorporated the mixing vanes directly on the positioning grids of a canless-type fuel assembly, which positioning or support grids are mounted on the control rod guide thimbles and support the fuel rods against lateral displacement and, to some extent, frictionally against longitudinal movement thereof. The use of the same structure both to space and support the fuel rods and to produce a lateral mixing flow places limitations on the mixing pattern that can be achieved.

It is the principal object of the invention to provide an improved structure which effectively promotes cross-flow mixing of coolant among the fuel rods of a fuel assembly, and which, furthermore, is essentially immune from impact damage due to lateral motion of the fuel rods.

The invention accordingly resides in a coolant-flow mixing grid for promoting the mixing of coolant flow through a nuclear-reactor fuel assembly along and between fuel rods supported by transverse support grids mounted on control-guide thimbles of the fuel assembly, said coolant-flow mixing grid comprising a plurality of interleaved inner straps arranged in an egg-crate-like configuration to define a plurality of inner cell openings for receiving respective ones of the fuel rods, at least one mixing vane for each of at least a number of said inner cell openings, said mixing vane being disposed on one of the inner straps and projecting therefrom in the downstream direction of said coolant flow and inwards generally toward the longitudinal axis of the cell opening in a manner such as to deflect coolant laterally, and a rigid protrusion disposed on said inner strap and which projects therefrom into the associated inner cell opening, characterized in that said mixing vane is disposed on one of the four strap segments defining the respective inner cell opening and projects therefrom so as to deflect coolant from one fuel rod toward an adjacent fuel rod, and that said rigid protrusion is a fuel-rod non-supporting protrusion disposed upstream of said mixing vane on the inner lateral face of said strap segment and projecting into the associated inner cell openings to an extent sufficient only to protect the associated mixing vane from damaging impact when a fuel rod disposed in the cell opening undergoes lateral motion.

This structure, being a mixing grid with no real fuel-rod supporting function, lends itself well to minimizing the amount of structural material used, insofar as the inner straps of the grids need to be only high enough to permit interleaving and to accommodate thereon the mixing vanes together with the protective protrusions associated therewith. Thus, there is less structure to parasitically absorb neutrons and to introduce large pressure drops. The pressure drop across the grid can be further reduced by orienting the protrusions on the inner straps in a manner such as to minimize the resistance they present to coolant flow through the respective cell openings. For high structural integrity, the mixing grid preferably includes an outer peripheral strap which considerably exceeds the inner straps in height, and to which opposite terminal end portions of the latter are attached. At least some of the inner straps preferably have reinforcing webs formed on the respective terminal end portions thereof in order to strengthen the attachment of the inner webs to the peripheral strap, and to prevent the latter from twisting and bowing under thermal stresses introduced during operation. Inwardly angled fins provided on the peripheral strap and extending from the downstream edge thereof (having regard to the coolant-flow direction) deflect coolant exiting from the border cell openings, defined along the inner face of the peripheral strap, inwardly of the mixing grid, as seen in extension or, in other words, toward a plane containing the longitudinal axis of the grid, whereby the cross-flow mixing effect of the grid is further enhanced.

In the preferred embodiment of the invention still to be described herein in detail, the mixing grid, in plan view, is rectangular and, more specifically, square and is composed of four partial straps connected together at the four corners of the rectangular grid. In order to avoid interference of the mixing grid with grids of adjacent fuel assemblies when the fuel assembly incorporating the mixing grid is being installed in or removed from a reactor core, the terminal ends of each partial strap are chamfered, and the peripheral strap preferably is provided with inwardly curved tabs extending from the upstream edge thereof.

A preferred embodiment of the invention will now be described, by way of example only, with reference to the accompanying drawings, in which:

Figure 1 is an elevational view of a fuel assembly employing a grid structure embodying the invention;

Figure 2 is a top plan view, as seen along line 2-2 of Figure 1, of the grid structure shown partially in outline and with the lower right-hand corner section thereof shown in detail;

Figure 3 is an enlarged view of the corner section 3-3 of the grid structure shown in Figure 2;

Figure 4 is an elevational view of a portion of the outer or peripheral strap as seen along line 4-4 of Figure 3;

Figure 5 is an elevational view of a portion of the outer strap as seen along line 5-5 of Figure 3;

Figure 6 is a sectional view taken along line 6-6 of Figure 3 and showing the connection between the end portion of one of the inner straps, with a reinforcing web thereon, and the outer peripheral strap;

Figure 7 is a sectional view similar to Figure 6 but taken along line 7-7 of Figure 3.

Figures 8, 9, 10 and 11 are sectional views taken along lines 8-8, 9-9, 10-10 and 11-11, respectively, of Figure 3 and showing the relationship between dimple protrusions on the inner straps at a given fuel-rod inner cell opening;

Figures 12, 13, 14 and 15 are sectional views taken along lines 12-12, 13-13, 14-14 and 15-15, respectively, of Figure 3 and showing the four inner strap segments associated with a given thimble cell opening, and the attachment of a sleeve within said opening for mounting of the grid structure on the control-rod guide thimbles; and

Figure 16 is an elevational view of a modification of an inner strap for forming the grid structure.

It should be understood that, in the following description, like reference characters will be used to designate like or corresponding parts shown in the several views, and terms such as "forward," "rearward," "left," "right," "upwardly," "downwardly" and the like are utilized for convenience and are not to be construed as limiting terms.

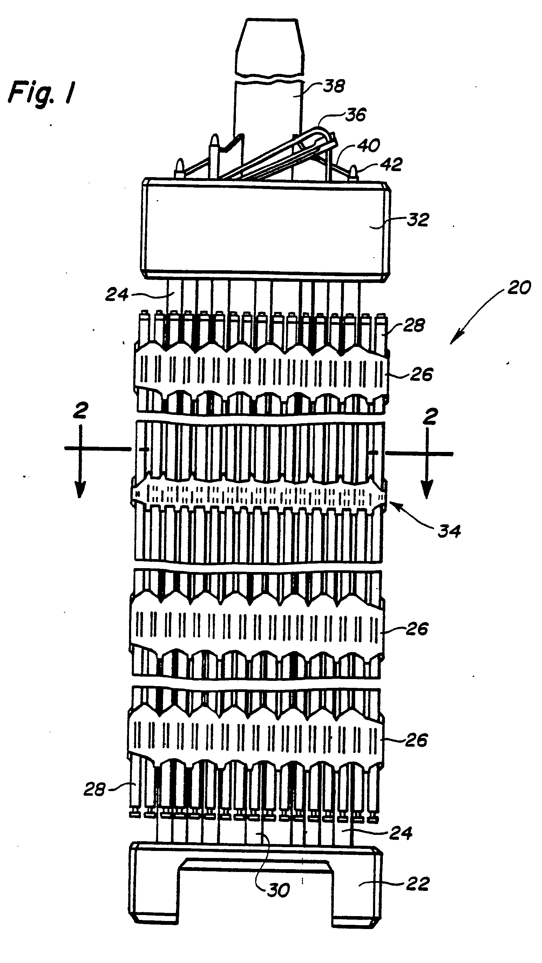

Referring now to the drawings, and particularly to Figure 1 thereof, the fuel assembly illustrated therein and designated generally with reference numeral 20 basically comprises a lower end structure or bottom nozzle 22 for supporting the assembly on a lower core plate (not shown) in the core region of a reactor (not shown); a number of elongate control-rod guide tubes or thimbles 24 projecting longitudinally upward from the bottom nozzle 22; a plurality (only three are shown) of transverse fuel-rod support grids 26 axially spaced apart along the guide thimbles 24; an organized array of elongate fuel rods 28 laterally spaced apart and supported by the grids 26; an instrumentation tube 30 located in the center of the assembly; and an upper end structure or top nozzle 32 attached to the upper ends of the guide thimbles 24, in a conventional manner, so as to form an integral assembly capable of being conventionally handled without damaging the assembly components. The bottom nozzle 22 and the top nozzle 32, as known in the art, include end plates (not shown) provided with flow openings permitting a fluid coolant, such as water, to flow upward among and along the various fuel rods 28 to receive thermal energy therefrom. In order to promote the mixing of the coolant among the fuel rods 28, a mixing-vane grid structure 34 embodying the invention is disposed between two of the support grids 26 being mounted on the guide thimbles 24. The mixing-vane grid structure 34 will be described in detail later herein.

The top nozzle 32 includes a transversely extending adapter plate (not shown) having upstanding sidewalls secured to the peripheral edges thereof and, together therewith, defining an enclosure or housing. An annular flange (not shown) is secured to the top of the sidewalls, and suitably clamped to this flange are leaf springs, such as leaf spring 36, which cooperate with the upper core plate (not shown) in a conventional manner to prevent hydraulic lifting of the fuel assembly caused by upward coolant flow while allowing for changes in fuel assembly length due to core-induced thermal expansion and the like. Disposed within the opening defined by the sidewalls of the top nozzle 32 is a conventional rod cluster control assembly 38 having radially extending flukes 40 connected to the upper ends of the control rods 42 for axially moving the latter in the control rod guide thimbles 24 in a manner well known in the art. In forming the fuel assembly 20, the support grids 26 and the mixing-vane grid structure 34 are attached to the guide thimbles 24 at predetermined axially spaced locations; the fuel rods 28 are inserted through the support grids 26 and the mixing-vane grid structure 34; the lower nozzle 22 is suitably attached to the lower ends of the guide thimbles 24; and then the top nozzle 32 is attached to the upper ends of the guide thimbles 24.

The fuel assembly 20 depicted in the drawings employs a square array of fuel rods 28, with the control-rod guide thimbles 24 strategically arranged within the fuel rod array, and with the bottom nozzle 22, the top nozzle 32, and the grids 26 consequently likewise substantially square. It should be understood, however, that neither the shape of the nozzles or of the grids nor the number or configuration of the fuel rods and guide thimbles is to be regarded as limiting, the invention being equally applicable to shapes, configurations, and arrangements different from those specifically shown.

It should be noted also that the fuel rods 28 are laterally positioned and supported in a predetermined array by the support or spacer grids 26. These grids 26 may be of a conventional type such as generally used in the art for the purpose of precisely maintaining the spacing between fuel rods, preventing rod vibration, providing lateral support, and, to some extent, frictionally retaining the fuel rods against longitudinal displacement thereof. Conventional spacer grids, such as those disclosed in the previously mentioned U.S. Patent Nos. 3,379,619 and 4,061,536, comprise a plurality of straps interleaved in an egg-crate-like manner to form cells through each of which extends one fuel rod to be supported at a given axial location by means of spring fingers and protrusions frictionally engaging the fuel rod at several (usually six) points on its periphery. Since the spacer grids 26 form no part of the present invention per se, it suffices to say that they laterally support the fuel rods 28, as noted above and that they may or may not have coolant-flow mixing vanes incorporated thereon, as desired.

Coolant Mixing Grid Structure

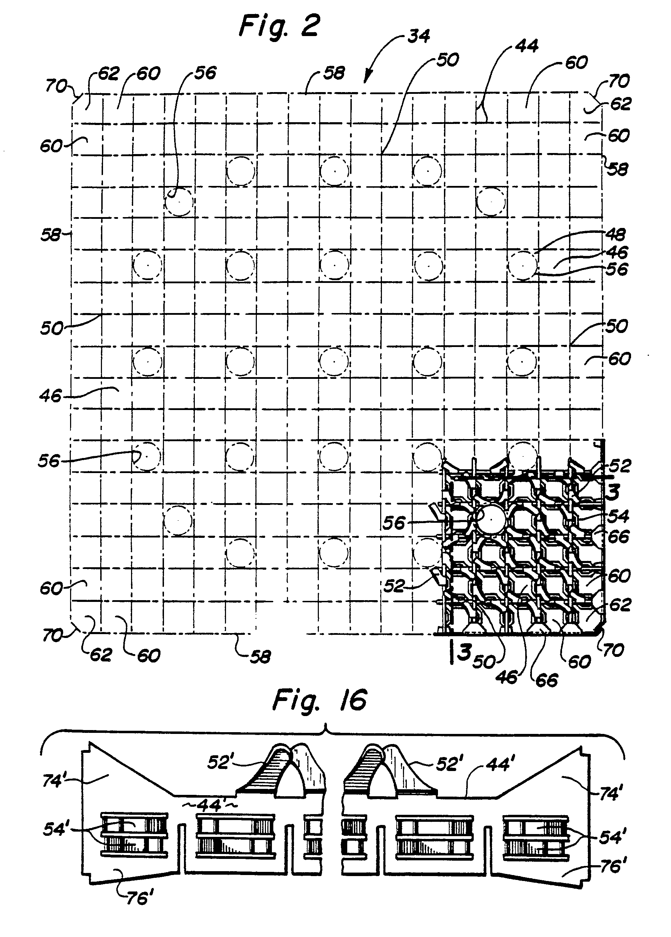

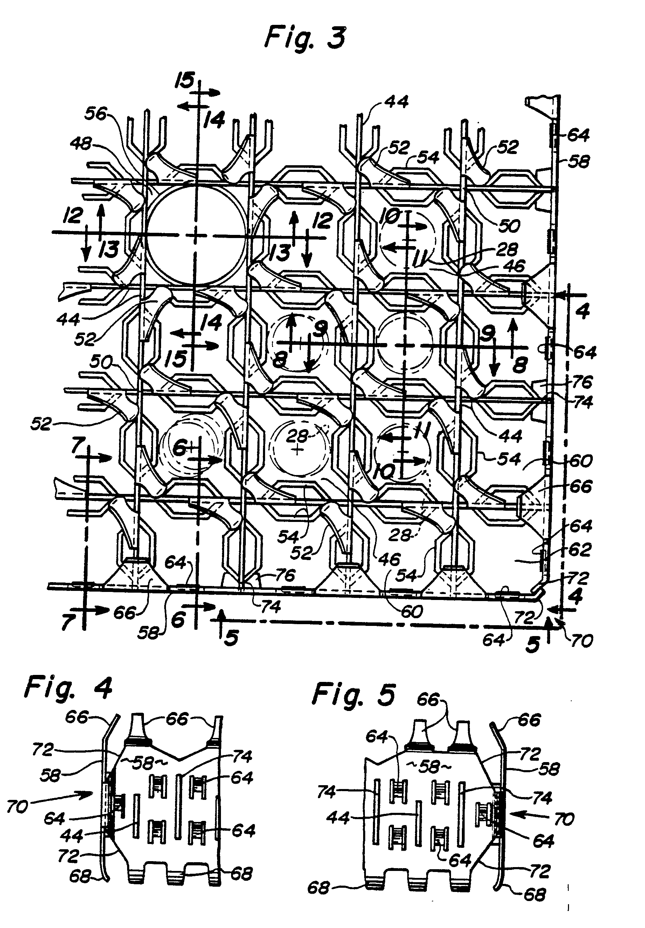

Referring now to Figures 2 to 15 and to Figures 2 and 3 in particular, the mixing grid structure 34 in the preferred embodiment of the invention comprises a plurality of interleaved inner straps 44 arranged in an egg-crate configuration to define a plurality of inner cell openings 46 for receiving therethrough respective ones of the fuel rods 28, and a number of thimble cell openings 48 for receiving therethrough respective ones of the guide thimbles 24. Each of the inner straps 44 is formed of interconnecting segments, and through the use of opposing slots, the straps are interlatched. At each intersection 50, the straps are suitably secured together, such as by welding or the like. The arrangement is such that the interconnecting segments of four separate straps 44 form a given inner cell opening 46 or thimble cell opening 48. Associated with each inner cell opening 46 is at least one mixing vane 52 on one of the strap segments defining the cell opening. Preferably, the mixing vane 52 is disposed on the top edge of the associated inner strap segment, i.e. it is disposed on the downstream edge of the strap having regard to the direction of coolant flow, and, in the preferred embodiment, there is a mixing vane 52 provided on the top edge of each of the inner strap segments 44 associated with each inner cell opening 46 having a fuel rod 28 extending therethrough. The mixing vane 52 is in the shape of a chicken's comb and slightly twisted, being cantilevered from the top edge of the associated inner strap segment and projecting upwardly therefrom and over toward the longitudinal centerline or axis of the inner cell opening 46. In the preferred embodiment, and as best seen from Figure 3, each of the mixing vanes 52 on one pair of opposing inner strap segments of a given inner cell opening 46 projects inwardly toward the cell opening, whereas each of the mixing vanes on the other pair of opposing strap segments of the same cell opening projects toward an adjacent cell opening. Thus, the arrangement of the mixing vanes 52 on any one inner strap 44 is such that every alternate mixing vane projects into an inner cell opening located either on one side or the other side of the strap. Broadly speaking, the mixing vanes 52 are so oriented as to laterally deflect the upwardly flowing coolant between adjacent fuel rods 28. It should be noted that neither the specific shape of the mixing vanes 52 nor the specific pattern of the mixing arrangement forms any part of the invention per se, it being sufficient, for the purposes of this invention, to say that at least one mixing vane 52 is associated with each of the inner cell openings 46 and that it extends into the cell opening.

During operation of fuel assembly 20, the fuel rods 28 tend to bend and bow due to the thermal stresses. In order to prevent the fuel rods from coming into damaging impact or contact with the mixing vanes 52 under such condition, each inner cell opening 46 having a fuel rod extending therethrough and a mixing vane 52 associated therewith also has associated therewith a protrusion or dimple 54 which extends from an inner strap segment into the cell opening to a greater extent than the associated mixing vane 52 such as to prevent the fuel rod 28 in the cell opening from impacting upon the mixing vane 52 in the event of lateral motion or bending of the fuel rod. The dimple 54 of a given cell opening 46 is disposed on the respective inner strap segment at a level below or upstream of the mixing vane 52, and it projects into the inner cell opening in a direction gernerally perpendicular to the longitudinal axis thereof. Preferably, there are four such dimples 54 associated with each inner cell opening 46, each dimple being located on a different one of the four inner strap segments that define the cell opening. In the preferred embodiment, each of the dimples 54 is so oriented on its respective inner strap segment as to permit the upwardly flowing coolant to pass through the dimple, thereby reducing the pressure drop of the coolant flow through the grid structure 34. As best seen in Figure 3, the dimples 54 are transversely extending arches, preferably of a generally trapezoidal shape, and they are rigid. It is recommended that the dimples 54 be formed integral with their associated inner straps 44, and that the latter together with the integral dimples 54 thereon be made from a low neutron-capture cross section material, such as zirconium or a zirconium alloy. The dimples 54 may be formed on their associated grid straps by a conventional stamping operation.

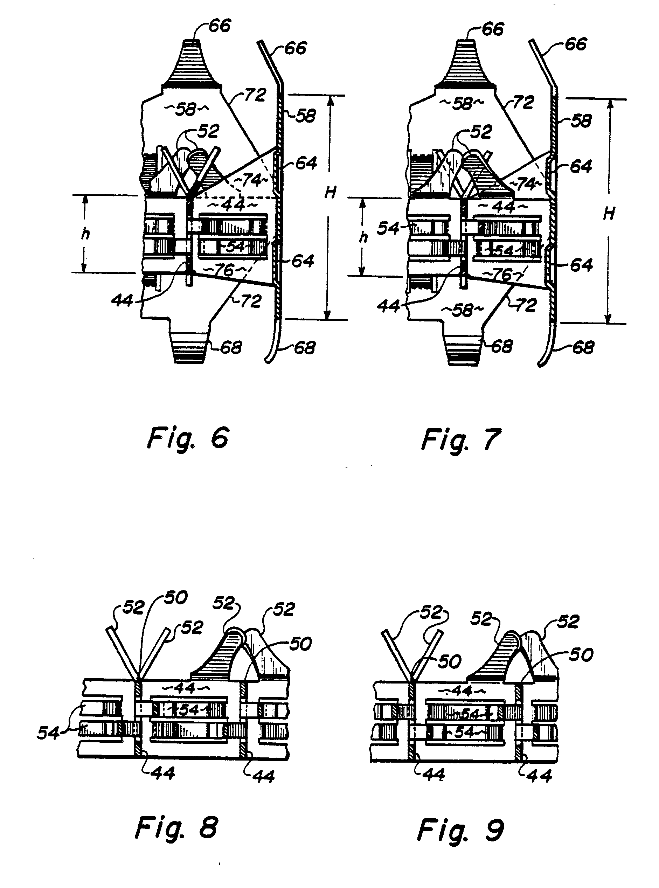

The disposition of the dimples 54 in a given inner cell opening 46 can be seen best from Figures 8 to 11 which show the respective dimples on the four straps 44 defining the cell opening. The relationship of the dimples with respect to each other is such that two of the four dimples in the cell opening lie in a first horizontal plane, whereas the other two dimples lie in a second horizontal plane which is parallel to and axially spaced from the first horizontal plane. It can be seen from these views that each inner strap segment has two dimples 54 formed thereon, one below the other, with one of the dimples projecting into one inner cell opening and the other projecting into an inner cell opening adjacent thereto. The specific arrangement of the dimples 54 of the inner cell opening from which the sections along lines 8-8 to 11-11 in Figure 3 were taken is such that the two dimples associated with the two adjacent straps located in the upper lefthand corner are disposed in an upper horizontal plane, whereas the two dimples associated with the adjacent straps located in the lower right-hand corner are disposed in a lower horizontal plane. This dimple arrangement alternates between adjacent inner cell openings 46. It should be pointed out that the specific arrangement of the dimples within a given inner cell opening is not critical. What is important is the existence of at least one such dimple for each mixing vane associated with a given inner cell opening, and that the dimple projects into the cell opening farther than the mixing vane so as to protect the latter against impacts from the fuel rod extending through the cell opening.

In Figure 3, fuel rods 28 are indicated, for illustrational purposes and in phantom lines, as disposed in six of the inner cell openings 46 shown. As can be clearly seen, the fuel rod 28 in the second inner cell opening from the right shown in the upper portion of Figure 3 does not touch any of the four dimples 54 in the associated cell opening and, of course, does not touch either of the two associated mixing vanes 52. On the other hand, each of the other five fuel rods is shown as bent or bowed laterally into contact with one or another of the four dimples disposed in the associated cell opening, which dimple keeps the bent fuel rod away from the mixing vane upon which otherwise, i.e. in the absence of the dimple, it could impact.

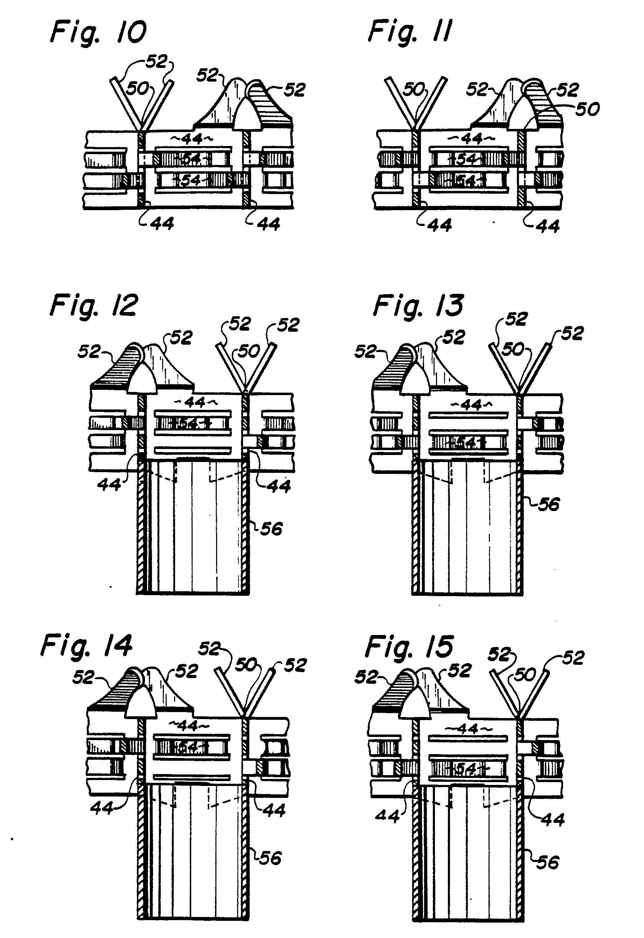

Referring now to Figures 12 to 15 showing sectional views taken from the inside of one of the thimble cell openings 48, it will be seen therefrom that a short sleeve 56 is disposed in each thimble cell opening 48 which sleeve is used for mounting the grid structure 34 on the respective control-rod guide thimble 24 (Figure 1) extending through the particular opening 48. The sleeve 56 is suitably attached, such as by welding or the like, to the lateral faces of the four inner strap segments associated with the thimble cell opening 48, the guide thimble 24 (Figure 1) extending through the sleeve 56 and being attached thereto in a conventional manner, such as by bulge-expanding or the like. If desired, the guide thimbles 24 may be attached directly to the inner strap segments of the thimble cell opening, in which case no sleeves would be used. Referring back to Figure 3, it can be seen that there are no dimples 54 projecting into the thimble cell opening 48, and none of the mixing vanes 52 disposed on the inner strap segments associated with the thimble cell opening projects into the thimble cell opening; these mixing vanes project over and into adjacent inner cell openings 46.

As best seen from Figures 2 and 3, the mixing grid structure 34 further includes an outer peripheral strap 58 attached to the respective terminal ends of the inner straps 44 to form an integral structure and to define a number of border cell openings 60 which are adapted to accept respective ones of the fuel rods 28. The attaching of inner straps 44 to the outer strap 58 is a well known operation, with short extensions normally provided on the .ends of the inner straps and projecting through corresponding slots in the outer strap. At the junction between each inner strap and the outer strap, the two are welded together, and then any inner strap portions extending through the openings in the outer strap and beyond the latter are ground off flush with the outer strap. Each border cell opening 60 is formed by three inner strap segments and a segment of the outer strap, whereas each of the four corner border cell openings 62 is formed by two inner strap segments and two segments of the outer strap. The border cell openings 60 are similar in construction to the inner cell openings 46, each border cell opening 60 having associated therewith at least one mixing vane 52 disposed on the upper edge of at least one of the inner strap segments bounding the opening 60; and preferably three dimples 54, one on each of the three inner strap segments. The corner border cell openings 62 likewise are of similar construction, having at least one mixing vane on one of its inner strap segments and a dimple formed on both of its inner strap segments. The mixing vanes and the dimple associated with each of the border cell openings 60, 62 are identical to the mixing vanes 52 and dimples 54 associated with an inner cell opening 46. Formed on the outer strap segment of each border cell opening 60 is a pair of axially spaced protrusions 64, whereas the two outer strap segments associated with a corner border cell opening 62 each contain one such protrusion, identical to protrusion 64 (see Figures 4 and 5). The protrusions 64 project only slightly into the respective border cell openings 60 and 62, they are generally longitudinally extending arches, generally trapezoidal in shape, and oriented such as to be closed to the passage of coolant flowing through the respective cell opening 60 or 62.

As best seen from Figures 4 and 5, disposed on the upper or downstream edge of the outer strap 58, at predetermined locations therealong, is a series of cantilevered fins 66 which project upward (downstream) and inward generally toward the longitudinal axis of the grid structure 34. The fins 66 serve to deflect the upwardly flowing coolant away from the outer periphery of the grid structure and across the fuel rods 28. Disposed on the lower or upstream edge of the outer strap 58, at predetermined locations therealong, is a series of inwardly curved taps 68 adapted to facilitate the assembling of the grid structure 34 on the guide thimbles 24 and also to assist in preventing one fuel assembly from catching on or interfering with an adjacent fuel assembly as the fuel assemblies are slid longitudinally past one another during loading and unloading of a reactor core. Preferably, the fins 66 and the tabs 68 are formed integral with the outer strap 58.

Again referring to Figure 2, it can be seen that the grid structure 34, in plan view, is generally square, the outer peripheral strap 58 being formed of four separate straps attached together and forming four separate corners 70. Preferably, the terminal end portions of each pair of adjacent outer straps forming a respective corner 70 is provided with a pair of diverging chamfers 72 each disposed at an angle of at least 52 degrees from the vertical (see Figures 4 and 5, and Figures 6 and 7). In the past, during loading and unloading of fuel assemblies in a reactor core, it could happen that a fuel assembly would become entangled with another fuel assembly due to the respective grid corners interfering with one another. This problem is substantially eliminated by chamfering the corners 70 of the grid structure 34.

To reduce the pressure drop in the fuel assembly 20, the mixing grid structure 34 has been specifically designed with a minimum of parasitic material. As best seen from Figures 6 and 7, all of the inner straps 44 have the same height "h" in the longitudinal or axial direction of the grid whereas the height "H" of the outer strap 58 direction is substantially greater than the height "h" of the inner straps 44. Even though the height of the inner straps 44, and thus the amount of parasitic material, have been substantially reduced (Figure 1 shouws that the mixing grid structure 34 is "undersized" as compared to the spacer and support grids 26), the structural integrity of the grid structure 34 is maintained. The greater height "H" of the outer strap 58 provides a relatively long planar surface for sliding past an adjacent fuel assembly and, in addition, enables the chamfers 72 on the corners 70 to be sufficiently long to enable corresponding grids on adjacent fuel assemblies to easily slip past one another.

With the height of the outer strap 58 substantially greater than the height of the inner straps 44 and the upper and lower linear portions or segments of the outer strap extending beyond the respective upper and lower edges of the inner straps 44, the grid structure 34 is provided with reinforcing webs on the terminal end portions of some of its inner straps in order to make the structure still more rigid and to prevent the outer strap 58 from warping and bowing. More specifically, and with particular reference to Figures 6 and 7, an upper reinforcing web 74 is integrally formed on the upper edge of the terminal end portion of the inner strap 44 shown, and a smaller reinforcing web 76 is formed on the lower edge of the terminal end portion of the inner strap. The upper web 74 slopes upwardly and outwardly from the top edge of the inner strap 44 to the lateral face of the outer strap 58, and the lower web 76 slopes downwardly and outwardly from the lower edge of the inner strap to the lateral face of the outer strap. It will be appreciated that, with the addition of the webs 74 and 76, the height of the terminal end of the inner strap 44 has been substantially increased to provide a longer lineal surface for reinforcing and strengthening the attachment connection of the inner straps 44 with the outer strap 58. In the preferred embodiment, only one of the terminal end portions of each of the inner straps 44 is provided with an upper web 74. The inner straps 44 are so arranged that every other strap has its end portion on a given side of the grid structure 34 provided with a web 74, as seen best from Figures 3, 6 and 7.

Figure 16 shows a modified inner strap 44' suitable for use with the grid structure 34. The inner strap 44' is substantially identical to the kind of strap 44 described hereinbefore, having identical mixing vanes 52' and dimples 54', except that it has an upper reinforcing web 74' and a lower reinforcing web 76' formed on each of its opposite terminal end portions. The reinforcing webs 74' and 76' are identical to the webs 74 and 76, respectively.

## Claims

1. A coolant-flow mixing grid for promoting the mixing of coolant flow through a nuclear-reactor fuel assembly along and between fuel rods supported by transverse support grids mounted on control-guide thimbles of the fuel assembly, said coolant-flow mixing grid (34) comprising a plurality of interleaved inner straps (44) arranged in an egg-crate-like configuration to define a plurality of inner cell openings (46) for receiving respective ones of the fuel rods, at least one mixing vane (52) for each of at least a number of said inner cell openings (46), said mixing vane being disposed on one of the inner straps and projecting therefrom in the downstream direction of said coolant flow and inwards generally toward the longitudinal axis of the cell opening in a manner such as to deflect coolant laterally, and a rigid protrusion (54) disposed on said inner strap and which projects therefrom into the associated inner cell opening, characterized in that said mixing vane (52) is disposed on one of the four strap segments defining the respective inner cell opening (46) and projects therefrom so as to deflect coolant from one fuel rod toward an adjacent fuel rod, and that said rigid protrusion (54) is a fuel-rod non-supporting protrusion disposed upstream of said mixing vane (52) on the inner lateral face of said strap segment and projecting into the associated inner cell openings (46) to an extent sufficient only to protect the associated mixing vane (52) from damaging impact when a fuel rod disposed in the cell opening undergoes lateral motion.

2. A coolant-flow mixing grid according to claim 1, characterized in that each of the strap segments defining an inner cell opening (46) has one said protrusion (54) disposed on the inner lateral face thereof.

3. A coolant-flow mixing grid according to claim 2, characterized in that the protrusions (54) on opposite strap segments and projecting into the same cell opening (46) are spaced apart a distance exceeding the diameter of the fuel rod to be received in said cell opening.

4. A coolant-flow mixing grid according to claim 2 or 3, characterized in that two of the protrusions (54) associated with an inner cell opening (46) lie in one of two parallel spaced planes perpendicular to the longitudinal axis of the cell opening, and the other two of said protrusions lie in the other of said planes.

5. A coolant-flow mixing grid according to any one of the preceding claims, characterized in that the mixing grid (34) includes an outer peripheral strap (58) having the opposite terminal ends of each inner strap (44) connected thereto so as, together with the inner straps, to form an integral structure and to define border cell openings (60, 62) for receiving fuel rods therethrough.

6. A coolant-flow mixing grid according to claim 5, characterized in that each of the border cell openings (60, 62) has associated therewith one said mixing vane (52) disposed on one of the inner strap segments associated with the respective border cell opening, each mixing vane (52) associated with a border cell opening having associated therewith one said protrusion (54) which extends into said border cell opening so as to protect the mixing vane from damaging impact by a fuel rod extending through the border cell opening.

7. A coolant-flow mixing grid according to claim 5 or 6, characterized in that said outer peripheral strap (58) has at least one dimple (64) disposed thereon at each border cell opening (60, 62), said dimple (64) projecting into the associated border cell opening from the inner face of the outer peripheral strap.

8. A coolant-flow mixing grid according to claim 7, characterized in that said dimple (64) is elongate, extends in the axial direction of the associated border cell opening, and is closed to coolant flow through the latter.

9. A coolant-flow mixing grid according to claim 5, 6, 7 or 8, characterized in that said outer peripheral strap (58) includes a plurality of coolant deflecting fins (66) extending, in spaced relationship with respect to each other, from the downstream edge of the peripheral strap and angled inwards generally toward the longitudinal axis of the mixing grid.

10. A coolant-flow mixing grid according to any one of claims 5 to 9, characterized in that the peripheral strap (58) includes a plurality of tabs (68) extending from the upstream edge thereof and curved inwards of the mixing grid as seen in extension.

11. A coolant-flow mixing grid according to any one of claims 5 to 10, characterized in that the outer peripheral strap (58) is formed of four partial straps connected together rectangularly so as to define four corners (70), the terminal ends of said partial straps being chamfered (72).

12. A coolant-flow mixing grid according to claim 11, characterized in that said terminal ends are chamfered approximately 52 degrees with respect to the longitudinal axis of the mixing grid.

13. A coolant-flow mixing grid according to any one of claims 5 to 12, characterized in that the inner straps (44) are substantially equal in height in the longitudinal direction of the grid, and said peripheral strap (58) is substantially higher in said longitudinal direction than said inner straps.

14. A coolant-flow mixing grid according to claim 13, characterized in that at least some of the inner straps (44) have reinforcing webs (74, 76) so formed on terminal end portions thereof as to reinforce the connection of the respective terminal end portions to the peripheral strap, and to prevent the latter from twisting and bowing due to thermal stresses introduced during operation in a fuel assembly.

15. A coolant-flow mixing grid according to claim 14, characterized in that each of the inner straps (44) with reinforcing webs (74, 76) thereon has one of said reinforcing webs formed integral therewith on the downstream edge of at least one terminal end portion thereof, said reinforcing web (74) sloping toward the peripheral strap (58) in the downstream direction of coolant flow.

16. A coolant-flow mixing grid according to claim 14 or 15, characterized in that each of the inner straps (44) with reinforcing webs (74, 76) thereon has one of said reinforcing webs formed integral therewith on the upstream edge of at least one terminal end portion thereof, said reinforcing web (76) sloping toward the peripheral strap (58) in the upstream direction of coolant flow.

17. A coolant-flow mixing grid according to claim 16, characterized in that said inner straps (44) alternately have a reinforcing web (74) on the downstream edge of one terminal end portion of the respective inner strap and a reinforcing web (76) on the upstream edge of the opposite end portion of the next following inner strap.

18. A coolant-flow mixing grid according to claim 16, characterized in that each of the inner straps (44) has a reinforcing web (74) on the downstream edge and a reinforcing web (76) on the upstream edge of each terminal end portion thereof.

19. A coolant-flow mixing grid according to any one of the preceding claims, characterized in that each protrusion (54) is so oriented as to present minimum resistance to coolant flow through the mixing grid.

20. A coolant-flow mixing grid according to any one of the preceding claims, characterized in that each protrusion (54) defines an arch extending transversely in a plane substantially perpendicular to the longitudinal axis of the respective cell opening (46), and which arch is open in the direction of coolant flow through the cell opening.

21. A coolant-flow mixing grid according to claim 20, characterized in that said arch is generally trapezoidal in shape.

22. A coolant-flow mixing grid according to any one of the preceding claims, characterized in that the interleaved inner straps (44) arranged in said egg-crate-like configuration define also thimble cell openings (48) for receiving therethrough respective ones of said control-rod guide thimbles (24), said thimble cell openings having associated therewith means (56) for mounting the mixing grid on said control-rod guide thimbles.

**Patentansprüche**

1. Kühlmittelströmungsgitter zur Förderung der Durchmischung der Kühlmittelströmung durch ein Kernbrennelement längs und zwischen Brennstäben, die durch quer angeordnete, auf Steuerstabführungsrohren des Brennelements montierten Haltegittern abgestützt sind, wobei die Kühlmittelströmungsmischgitter (34) jeweils eine Mehrzahl von ineinandergreifenden, in eierkistenartiger Konfiguration angeordneten inneren Streifen (44) zur Bildung einer Vielzahl innerer Zellenöffnungen (46) zur Aufnahme jeweils eines Brennstabs, mindestens eine Mischfahne (52) für jede mindestens einer Anzahl der inneren Zellenöffnungen (46), die an einem der inneren Streifen angeordnet ist und von diesem bezüglich der Kühlmittelströmung in stromabwärtiger Richtung und einwärts etwa zur Längsachse der Zellenöffnung hin derart vorspringt, daß das Kühlmittel seitlich abgelenkt wird, und einen starren Vorsprung (54) aufweisen, der an dem inneren Streifen angeordnet ist und von diesem in die zugeordnete innere Zellenöffnung vorspringt, dadurch gekennzeichnet, daß die Mischfahne (52) an einem der vier die betreffende innere Zellenöffnung (46) bildenden Streifensegmente angeordnet ist und von da aus derart vorspringt, daß sie das Kühlmittel von einem Brennstab zu einem benachbarten Brennstab hin ablenkt, und daß der starre Vorsprung (54) ein stromauf der Mischfahne (52) an der inneren Seitenfläche des betreffenden Streifensegments angeordneter, den betreffenden Brennstab nicht abstützender Vorsprung ist, der in die betreffende innere Zellenöffnung (46) nur in ausreichendem Maße vorspringt, um die zugeordnete Mischfahne (52) vor schädlichen Stößen zu schützen, wenn der in dieser Zellenöffnung befindliche Brennstab eine Seitwärtsbewegung erfährt.

2. Kühlmittelströmungsmischgitter nach Anspruch 1, dadurch gekennzeichnet, daß jedes der eine innere Zellenöffnung (46) bildenden Streifensegmente einen Vorsprung (54) der genannten Art an seiner inneren Seitenfläche aufweist.

3. Kühlmittelströmungsmischgitter nach Anspruch 2, dadurch gekennzeichnet, daß die Vorsprünge (54) auf gegenüberliegenden Streifensegmenten, die in die gleiche Zellenöffnung (46) vorspringen, eine den Durchmesser des in der Zellenöffnung aufzunehmenden Brennstabs übersteigende Distanz voneinander entfernt sind.

4. Kühlmittelströmungsmischgitter nach Anspruch 2 oder 3, dadurch gekennzeichnet, daß zwei der einer inneren Zellenöffnung (46) zugeordneten Vorsprünge (54) in der einen Ebene und die beiden anderen Vorsprünge in der anderen Ebene von zwei mit gegenseitigem Abstand verlaufenden, zur Zellenöffnungsachse parallelen Ebenen angeordnet sind.

5. Kühlmittelströmungsmischgitter nach einem der vorhergehenden Ansprüche, dadurch gekennzeichnet, daß das Mischgitter (34) einen äußeren Umfangsstreifen (58) aufweist, an welchem die entgegengesetzten Enden jedes inneren Streifens (44) derart angeschlossen sind, daß er zusammen mit den inneren Streifen eine integrale Struktur bildet und Randzellenöffnungen (60, 62) zur Aufnahme von Brennstäben begrenzt.

6. Kühlmittelströmungsmischgitter nach Anspruch 5, dadurch gekennzeichnet, daß jeder der Randzellenöffnungen (60, 62) eine Mischfahne (52) zugeordnet ist, die an einer der zu der betreffenden Randzellenöffnung gehörenden inneren Streifensegmente angeordnet ist, wobei jeder einer Randzellenöffnung zugeorndeten Mischfahne (52) ein Vorsprung (54) zugeordnet ist, der in die Randzellenöffnung derart hineinragt, daß er die Mischfahne gegen schädliche Stöße von einem durch die Randzellenöffnung hindurchverlaufenden Brennstab schützt.

7. Kühlmittelströmungsmischgitter nach Anspruch 5 oder 6, dadurch gekennzeichnet, daß der äußere Umfangsstreifen (58) mindestens eine Eindrückung (64) aufweist, die von der Innenseite des äußeren Umfangsstreifens in die betreffende Randzellehöffnung hineinragt.

8. Kühlmittelströmungsmischgitter nach Anspruch 7, dadurch gekennzeichnet, daß die Eindrückung (64) länglich ist, in Axialrichtung der betreffenden Randzellenöffnung verläuft und für die Kühlmittelströmung durch dieselbe geschlossen ist.

9. Kühlmittelströmungsmischgitter nach Anspruch 5, 6, 7 oder 8, dadurch gekennzeichnet, daß der äußere Umfangsstreifen (58) eine Mehrzahl von Kühlmittelablenkfahnen (66) aufweist, die mit gegenseitigen Abständen von der stromabwärtigen Streifenkante und einwärts etwa zur Längsachse des Mischgitters hin abgewinkelt wegragen.

10. Kühlmittelströmungsmischgitter nach einem der Ansprüche 5 bis 9, dadurch gekennzeichnet, daß der Umfangsstreifen (58) eine Vielzahl von Nasen (68) aufweist, die von seiner stromaufwärtigen Kante und bezüglich des verlängerten Gitterumfangs einwärts gekrümmt wegragen.

11. Kühlmittelströmungsmischgitter nach einem der Ansprüche 5 bis 10, dadurch gekennzeichnet, daß der äußere Umfangsstreifen (58) aus vier Teilstreifen gebildet ist, die rechteckig miteinander verbunden sind und so vier Ecken (70) bilden, und wobei die Anschlußenden der Teilstreifen abgeschrägt (72) sind.

12. Kühlmittelströmungsmischgitter nach Anspruch 11, dadurch gekennzeichnet, daß die Anschlußenden um etwa 52° mit Bezug auf die Gitterlängsachse abgeschrägt sind.

13. Kühlmittelströmungsmischgitter nach einem der Ansprüche 5 bis 12, dadurch gekennzeichnet, daß die inneren Streifen (44) in Gitterlängsrichtung im wesentlichen gleiche Höhe haben und der Umfangsstreifen (58) in Gitterlängsrichtung wesentlich höher als die inneren Streifen ist.

14. Kühlmittelströmungsmischgitter nach Anspruch 13, dadurch gekennzeichnet, daß mindestens einige der inneren Streifen (44) Verstärkungsstege (74, 76) aufweisen, die so an ihren Anschlußendabschnitten gebildet sind, daß sie die Verbindung der betreffenden Anschlußendabschnitte am Umfangsstreifen verstärken und ein Verdrehen und Biegen desselben aufgrund während des Betriebs des Brennelements auftretenden Wärmespannungen verhindern.

15. Kühlmittelströmungsmischgitter nach Anspruch 14, dadurch gekennzeichnet, daß bei jedem inneren Streifen (44) mit Verstärkungsstegen (74, 76) einer der Verstärkungsstege einstükkig an der stromabwärtigen Kante mindestens eines Anschlußendabschnitts gebildet und in bezüglich der Kühlmittelströmung stromabwärtiger Richtung zum Umfangsstreifen (58) hin schräg verlaufend ausgebildet ist.

16. Kühlmittelströmungsmischgitter nach Anspruch 14 oder 15, dadurch gekennzeichnet, daß bei jedem inneren Streifen (44) mit Verstärkungsstegen (74, 76) einer der Verstärkungsstege einteilig mit der stromaufwärtigen Kante mindestens eines Anschlußendabschnitts ausgebildet und in bezüglich der Kühlmittelströmung stromaufwärtiger Richtung zum Umfangsstreifen (58) schräg verlaufend ausgebildet ist.

17. Kühlmittelströmungsmischgitter nach Anspruch 16, dadurch gekennzeichnet, daß die inneren Streifen (44) abwechselnd einen Verstärkungssteg (74) an der stromabwärtigen Kante eines Anschlußendabschnitts des betreffenden inneren Streifens und einen Verstärkungssteg (76) an der stromaufwärtigen Kante des entgegengesetzten Endabschnitts des nächstfolgenden inneren Streifens aufweisen.

18. Kühlmittelströmungsmischgitter nach Anspruch 16, dadurch gekennzeichnet, daß jeder der inneren Streifen (44) einen Verstärkungssteg (74) an der stromabwärtigen Kante und einen Verstärkungssteg (76) an der stromaufwärtigen Kante jedes Anschlußendabschnitts aufweist.

19. Kühlmittelströmungsmischgitter nach einem der vorhergehenden Ansprüche, dadurch gekennzeichnet, daß jeder Vorsprung (54) so orientiert ist, daß er der Kühlmitteltrömung durch das Mischgitter einen minimalen Widerstand entgegensetzt.

20. Kühlmittelströmungsmischgitter nach einem der vorhergehenden Ansprüche, dadurch gekennzeichnet, daß jeder Vorsprung (54) einen in einer zur Längsachse der betreffenden Zellenöffnung (46) etwa senkrechten Ebene querverlaufenden Bogen bildet, der in Richtung der Kühlmittelströmung durch die Zellenöffnung offen ist.

21. Kühlmittelströmungsmischgitter nach Anspruch 20, dadurch gekennzeichnet, daß der Bogen eine trapezartige Form hat.

22. Kühlmittelströmungsmischgitter nach einem der vorhergehenden Ansprüche, dadurch gekennzeichnet, daß die in eierkistenartiger Konfiguration angeordneten und ineinandergreifenden inneren Streifen (44) auch Führungsrohrzellenöffnungen (48) zur Aufnahme der genannten Steuerstabführungsrohre (24) bilden, und daß diesen Führungsrohrzellenöffnungen Mittel (56) zur Montage des Mischgitters an den Steuerstabführungsrohren zugeordnet sind.

## Revendications

1. Grille de mélange de caloporteur pour provoquer le mélange d'un courant de caloporteur circulant à travers un assemblage combustible d'un réacteur nucléaire le long et entre des barres de combustible supportées par des grilles de support transversales montées sur des chaussettes ou tubes-guides de barre de commande de l'assemblage combustible, ladite grille (34) de mélange du caloporteur comportant une pluralité de bandes intérieures enchevêtrées (44) disposées dans une configuration à claire-voie de façon à définir une pluralité d'ouvertures de cellules intérieures (46) pour recevoir des barres correspondantes parmi les barres de combustible, au moins une aube mélangeuse (52) pour chacune d'au moins un certain nombre desdites ouvertures de cellules intérieures (46), ladite aube mélangeuse étant disposée sur l'une des bandes intérieures et faisant saillie à partir de celle-ci dans la direction aval dudit courant de caloporteur et globalement vers l'intérieur en direction de l'axe longitudinal de l'ouverture de cellule de façon à dévier le caloporteur latéralement, et une saillie rigide (54) disposée sur ladite bande intérieure et qui s'étend à partir de celle-ci dans l'ouverture de cellule intérieure associée, caractérisée en ce que ladite aube mélangeuse (52) est disposée sur l'un des quatre segments de bande définissant l'ouverture de cellule intérieure correspondante (46) et s'étend à partir de celui-ci de façon à dévier le caloporteur d'une barre de combustible vers une barre de combustible adjacente, et en ce que ladite saillie rigide (54) est une saillie ne supportant pas de barre de combustible disposée en amont de ladite aube mélangeuse (52) sur la face latérale intérieure dudit segment de bande et s'étendant dans les ouvertures de cellules intérieures associées (46) sur une étendue seulement suffisante pour protéger l'aube mélangeuse associée (52) contre un impact pouvant l'endommager lorsqu'une barre de combustible disposée dans l'ouverture de cellule subit un déplacement latéral.

2. Grille de mélange de caloporteur selon la revendication 1, caractérisée en ce que chacun des segments de bande définissant une ouverture de cellule intérieure (46) possède une desdites saillies (54) disposée sur sa face latérale inférieure.

3. Grille de mélange de caloporteur selon la revendication 2, caractérisée en ce que les saillies (54) se trouvant sur les segments de bande opposés et s'étendant dans la même ouverture de cellule (46) sont espacées l'une de l'autre d'une distance excédant le diamètre de la barre de combustible devant être reçue dans ladite ouverture de cellule.

4. Grille de mélange de caloporteur selon la revendication 2 ou 3, caractérisée en ce que deux des saillies (54) associées à une ouverture de cellule intérieure (46) se trouvent dans l'un de deux plans espacés parallèlement, perpendiculaires à l'axe longitudinal de l'ouverture de cellule, et en ce que les deux autres desdites saillies se trouvent dans l'autre desdits plans.

5. Grille de mélange de caloporteur selon l'une quelconque des revendications précédentes, caractérisée en ce que la grille de mélange (34) comporte une bande périphérique extérieure (58) à laquelle sont connectées les extrémités opposées de chaque bande intérieure (44), de façon à former, avec les bandes intérieures, une structure unique, et à définir des ouvertures de cellules encadrantes (60, 62) pour recevoir les barres de combustible à travers celles-ci.

6. Grille de mélange de caloporteur selon la revendication 5, caractérisée en ce qu'à chacune des ouvertures de cellules encadrantes (60, 62) est associée l'une desdites aubes mélangeuses (52) disposée sur l'un des segments de bande intérieure associés à l'ouverture de cellule encadrante correspondante, chaque aube mélangeuse (52), associée avec une ouverture de cellule encadrante, étant associée avec une desdites saillies (54) qui s'étend dans ladite ouverture de cellule encadrante de façon à protéger l'aube mélangeuse de l'impact d'une barre de combustible s'étendant à travers l'ouverture de cellule encadrante, qui pourrait l'endommager.

7. Grille de mélange de caloporteur selon la revendication 5 ou 6, caractérisée en ce que ladite bande périphérique extérieure (58) possède au moins une bosse (64) qui y est disposée à chaque ouverture de cellule encadrante (60, 62), ladite bosse (64) s'étendant dans l'ouverture de cellule encadrante associée, depuis la face intérieure de la bande périphérique extérieure.

8. Grille de mélange de caloporteur selon la revendication 7, caractérisée en ce que ladite bosse (64) est allongée, s'étend dans la direction axiale de l'ouverture de cellule encadrante associée, et est fermée à l'écoulement du caloporteur à travers cette dernière.

9. Grille de mélange de caloporteur selon la revendication 5, 6, 7 ou 8, caractérisée en ce que ladite bande périphérique extérieure (58) comporte une pluralité d'ailettes de déviation de caloporteur (66) s'étendant, en étant espacées les unes par rapport aux autres, depuis le bord aval de la bande périphérique et en étant inclinées vers l'intérieur, globalement en direction de l'axe longitudinal de la grille de mélange.

10. Grille de mélange de caloporteur selon l'une quelconque des revendications 5 à 9, caractérisée en ce que la bande périphérique (58) comporte une pluralité de pattes (68) s'étendant depuis le bord amont de celle-ci et courbées vers l'intérieur de la grille de mélange vue en agrandissement.

11. Grille de mélange de caloporteur selon l'une quelconque des revendications 5 à 10, caractérisée en ce que la bande périphérique extérieure (58) est formée de quatre bandes partielles connectées ensemble de façon rectangulaire afin de définir quatre coins (70), les extrémités desdites bandes partielles étant chamfreinées (72).

12. Grille de mélange de caloporteur selon la revendication 11, caractérisée en ce que lesdites extrémités sont chamfreinées approximativement de 52 degrés par rapport à l'axe longitudinal de la grille de mélange.

13. Grille de mélange de caloporteur selon l'une quelconque des revendications 5 à 12, caractérisée en ce que les bandes intérieures (44) sont substantiellement égales en hauteur dans la direction longitudinale de la grille, et en ce que ladite bande périphérique (58) est substantiellement plus haute dans ladite direction longitudinale que lesdites bandes intérieures.

14. Grille de mélange de caloporteur selon la revendication 13, caractérisée en ce qu'au moins certaines des bandes intérieures (44) possèdent des flasques ou âmes de renforcement (74, 76) formés sur leurs parties d'extrémité de façon à renforcer la connexion des parties d'extrémité respectives avec la bande périphérique, et de façon à empêcher cette dernière de se tordre ou de se courber sous l'effet des efforts thermiques introduits durant le fonctionnement dans un assemblage combustible.

15. Grille de mélange de caloporteur selon la revendication 14, caractérisée en ce que dans chacune des bandes intérieures (44) avec les flasques de renforcement (74, 76) qui s'y trouvent, un desdits flasques de renforcement fait partie intégrante de cette bande et est formé sur le bord aval d'au moins une partie d'extrémité de cette bande, ledit flasque de renforcement (74) étant incliné vers la bande périphérique (58) dans la direction aval de l'écoulement de caloporteur.

16. Grille de mélange de caloporteur selon la revendication 14 ou 15, caractérisée en ce que chacune des bandes intérieures (44) avec les flasques de renforcement (74, 76) qui s'y trouvent a l'un desdits flasques de renforcement qui en fait partie intégrante et qui est formé sur le bord amont d'au moins une de ses parties d'extrémité, ledit flasque de renforcement (76) étant incliné vers la bande périphérique (58) dans la direction amont de l'écoulement de caloporteur.

17. Grille de mélange de caloporteur selon la revendication 16, caractérisée en ce que lesdites bandes intérieures (44) possèdent alternativement un flasque de renforcement (74) sur le bord aval d'une partie d'extrémité terminale de la bande intérieure correspondante et un flasque de renforcement (76) sur le bord amont de la partie d'extrémité opposée de la bande intérieure venant immédiatement à la suite.

18. Grille de mélange de caloporteur selon la revendication 16, caractérisée en ce que chacune des bandes intérieures (44) possède un flasque de renforcement (74) sur le bord aval et un flasque de renforcement (76) sur le bord amont de chaque partie d'extrémité qu'elle comporte.

19. Grille de mélange de caloporteur selon l'une quelconque des revendications précédentes, caractérisé en ce que chaque saillie (54) est orientée de façon à présenter une résistance minimale à l'écoulement du caloporteur à travers la grille de mélange.

20. Grille de mélange de caloporteur selon l'une quelconque des revendications précédentes, caractérisée en ce que chaque saillie (54) définit une arche s'étendant transversalement dans un plan substantiellement perpendiculaire à l'axe longitudinal de l'ouverture de cellule correspondante (46), laquelle arche est ouverte dans la direction de l'écoulement du caloporteur à travers l'ouverture de cellule.

21. Grille de mélange de caloporteur selon la revendication 20, caractérisée en ce que ladite arche est de forme globalement trapézoïdale.

22. Grille de mélange de caloporteur selon l'une quelconques des revendications précédentes, caractérisée en ce que les bandes intérieures enchevêtrées (44) disposées dans ladite configuration à claire-voie définissent également des ouvertures (48) de cellules pour tubes-guides destinées à recevoir à travers celles-ci les tubes-guides correspondants parmi lesdits tubes-guides (24) de barres de commande, lesdites ouvertures de cellules pour tubes-guides étant associées à des moyens (56) pour monter la grille de mélange sur lesdits tubes-guides de barre de commande.

Fig. I

**Fig. 2**

**Fig. 16**

## Fig. 3

## Fig. 4

## Fig. 5

Fig. 6                    Fig. 7

Fig. 8                    Fig. 9

Fig. 10

Fig. 11

Fig. 12

Fig. 13

Fig. 14

Fig. 15